# EUROPÄISCHE PATENTSCHRIFT

(11) **EP 4 091 875 B1**
(45) Veröffentlichungstag und Bekanntmachung des Hinweises auf die Patenterteilung: **02.04.2025**
(21) Anmeldenummer: 22173312.4
(22) Anmeldetag: 13.05.2022
(51) Int. Cl.: B60N 2/75

(54) **ARMLEHNE**
ARMREST
ACCOUDOIR

(30) Priorität: 18.05.2021 DE 102021112868
(43) Veröffentlichungstag der Anmeldung: 23.11.2022
(73) Patentinhaber: GRAMMER AG, 92289 Ursensollen (DE)
(72) Erfinder: Nuss, Ralph, 92284 Poppenricht (DE)
(74) Vertreter: Roche, von Westernhagen & Ehresmann

(56) Entgegenhaltungen:
- DE-A1- 102019 000 119
- US-B2- 7 469 964

## Beschreibung

Die Erfindung betrifft eine Armlehne eines Sitzes, insbesondere eines Fahrzeugsitzes. Ein Fahrzeug kann im Sinne dieser Erfindung ein Land-, Luft- oder Wasserfahrzeug sein.

Eine solche Armlehne ist aus der 10 2019 000 119 A1 bekannt. Die Armauflage dieser Armlehne weist ein sitzfestes Führungsrohr auf, in welchem eine armauflagefeste Achse derart geführt und angetrieben ist, dass die Achse zunächst seitlich von dem Sitz entfernbar ist und anschließend in eine Gebrauchsposition geschwenkt werden kann. Dafür ist in dem Führungsrohr eine Kulisse vorgesehen, welche ein Schwenken erst erlaubt, wenn die Armauflage von dem Sitz entfernt wurde. Die seitliche Bewegung wird von einem Motor vorgenommen, welcher bei der Bewegung der Armauflage in die entfernte Position eine Feder spannt. Die umgekehrte Bewegung wird von der Feder angetrieben. Eine Armlehne mit einer Lateralmechanik mit einem Viergelenk aber keiner Schwenkmechanik ist der US7469964 zu entnehmen.

Es war Aufgabe der Erfindung eine Armlehne zu schaffen, die einen geringen Bauraum erfordert und die mit einem relativ geringen Fertigungsaufwand herstellbar ist.

Die Aufgabe wurde gelöst durch eine Armlehne mit den Merkmalen des Anspruchs 1.

Die Armlehne umfasst eine Armauflage, die relativ zu dem Sitz mit einer Lateralmechanik zwischen einer ersten proximalen Position und einer dritten distalen Position bewegbar ist. Dabei wird die Armauflage über eine zweite Zwischenposition zwischen der proximalen Position und der distalen Position geschwenkt. In der proximalen Position ist die Armauflage z.B. in einer Aussparung der Rückenlehne des Sitzes aufgenommen und / oder z.B. parallel zu einer Sagittalebene in Richtung x hinter dem Sitz, oder seitlich oder hinter einer Insassen-Anlagefläche des Sitzes angeordnet. In der distalen Position ist die Armauflage z.B. von der Rückenlehne derart lateral in Richtung y, parallel zu einer Transversalebene beabstandet, dass ein Schwenken der Armauflage möglich ist.

Die Worte Sagittalebene, Transversalebene, proximal und distal sind Begriffe, die Ebenen des Körpers eines Sitzinsassen beschreiben, hier aber in gleicher Weise aber auch auf den Fahrzeugsitz an sich angewendet werden, in welchem der Insasse in der vorgesehenen Sitzhaltung Platz genommen hat.

Mit einer Schwenkmechanik der Armlehne ist die Armauflage zwischen einer primären Position und einer tertiären Position schwenkbar. Die Armlehne wird über eine sekundäre Position hinweg geschwenkt, die eine Zwischenposition zwischen der primären Position und der sekundären Position ist. In der primären Position ist eine Längsachse der Armauflage z.B. im Bereich einer Vertikalen angeordnet, der Winkel kann aber davon abweichen. Die Abweichung kann bis zu 25° betragen, insbesondere 0° bis 15°. Die primäre Position ist z.B. eine etwa vertikale Position. In der tertiären Position ist die Längsachse der Armauflage z.B. im Bereich einer Horizontalen angeordnet, kann aber davon abweichen, bis zu 25%, insbesondere 0° bis 15°. Die tertiäre Position ist z.B. eine etwa horizontale Position.

Die Lateralmechanik umfasst eine Gelenkverbindung mit einem an dem Sitz befestigbaren ersten Teil und einem der Armauflage zugeordneten zweiten Teil. Die Gelenkverbindung bildet z.B. mit dem ersten Teil sowie mit dem zweiten Teil wenigstens ein Koppelgetriebe. Mit dem Koppelgetriebe ist das mit der Armlehne verbundene zweite Teil relativ zu dem ersten Teil auf einer Koppelkurve zwischen einer ersten Position und einer dritten Position bewegbar. Die Bewegung des zweiten Teils erfolgt z.B. in einer horizontalen x-y-Ebene ohne wesentlichen vertikalen Bewegungsanteil in Richtung z. Das erste Teil ist z.B. mit wenigstens einem Lenker schwenkbar verbunden, wobei der Lenker außerdem schwenkbar mit dem zweiten Teil verbunden ist.

Z.B. umfasst die Gelenkverbindung ein Viergelenk. In diesem Fall ist die Armauflage auf einer definierten Bewegungsbahn geführt, die von einer von dem Viergelenk vorgegebenen Koppelkurve gebildet ist. Das Viergelenk umfasst z.B. wenigstens einen ersten Lenker und wenigstens einen zweiten Lenker, wobei jeder Lenker mit dem ersten Teil ein Schwenkgelenk bildet und mit dem zweiten Teil ebenfalls ein Schwenkgelenk bildet. Das Viergelenk kann zur Erhöhung der Stabilität als mehrfaches Viergelenk mit mehreren ersten Lenkern und mehreren zweiten Lenkern oder beliebigen Kombinationen daraus ausgebildet sein. Z.B. weist das Viergelenk zwei erste Lenker und zwei zweite Lenker auf. Alternativ können die zwei ersten Lenker Teil eines ersten Bügels sein und die zwei zweiten Lenker Teil eines zweiten Bügels sein. Z. B. schwenken die Lenker des Viergelenks bei der Bewegung zwischen der ersten und der dritten Position um etwa 90°.

Vorteile der Bewegung der Lateralmechanik mittels eines Koppelgetriebes liegen z.B. darin, dass die Armauflage eine stabile Führung und eine günstige Bewegungscharakteristik aufweist.

Die Schwenkmechanik umfasst z.B. das zweite Teil sowie ein armauflagefestes Schwenkteil, wobei das zweite Teil und das Schwenkteil miteinander ein Schwenkgelenk bilden. Anstelle des zweiten Teils kann auch ein daran befestigtes Element Teil der Schwenkmechanik sein. Das zweite Teil und das Schwenkteil definieren eine Schwenkachse, um welche die Armauflage zwischen der ersten Position und der zweiten Position schwenkbar ist.

Die Bewegung der Lateralmechanik und/oder der Schwenkmechanik kann z.B. manuell erfolgen, d. h., ein Antrieb ist nicht notwendig.

Die Lateralmechanik und / oder die Schwenkmechanik weisen alternativ z.B. wenigstens in einem Teilbereich ihrer Bewegung einen Antrieb auf. D. h., die Lateralmechanik und/oder die Schwenkmechanik weisen z.B. in dem gesamten Bereich ihrer Bewegung einen Antrieb auf. Alternativ weisen Lateralmechanik und / oder die Schwenkmechanik lediglich in einem Teilbereich einen Antrieb auf. Eine Antriebsvorrichtung kann für die Bewegung der Lateralmechanik ein Lateralgetriebe und / oder für die Bewegung der Schwenkmechanik ein Schwenkgetriebe aufweisen.

Gemäß einer Alternative sind die Lateralmechanik und die Schwenkmechanik über ein Getriebe gekoppelt und bewegen sich synchron. Das Getriebe ist z.B. von lediglich einem Antrieb angetrieben.

Die Übersetzung des jeweiligen Getriebes kann z.B. 1:1 betragen, kann alternativ aber auch andere Übersetzungen aufweisen. Die Übersetzung kann z.B. dafür vorgesehen sein, die Bewegung besser dosieren zu können und auf die Kräfte Einfluss zu nehmen. Auf diese Weise kann z.B. die Drehzahl eines in der Regel mit hoher Drehzahl drehenden Antriebsmotors so übersetzt werden, dass eine gewünschte Bewegungsgeschwindigkeit bei der Lateralbewegung und / oder bei der Schwenkbewegung erhalten wird.

Über die Übersetzung kann z.B. in dem Fall, dass lediglich ein Antrieb vorhanden ist, der Bewegungsbereich der jeweiligen Mechanik, d.h. Lateralmechanik und Schwenkmechanik, festgelegt werden. Z.B. wird die Lateralmechanik über den ganzen Bewegungsbereich angetrieben. Mittels der Übersetzung des Schwenkgetriebes kann dann z.B. festgelegt werden, dass die Schwenkmechanik lediglich über einen Teil der Bewegung, z.B. 45° angetrieben ist.

Gemäß einer Alternative ist z.B. nur die Lateralmechanik angetrieben. Hier kann die Schwenkmechanik z. B. einen Energiespeicher enthalten. Z. B. wird die Armauflage von einer potentiellen Energie in die tertiäre Position bewegt. Z.B. unterstützt ein Energiespeicher die Bewegung in die primäre Position.

Gemäß einer weiteren Alternative ist z.B. die Lateralmechanik vollständig angetrieben und die Schwenkmechanik ist in wenigstens einem Teilbereich angetrieben. Hierbei ist es z.B. möglich lediglich das Viergelenk anzutreiben und die Bewegung des Viergelenks ebenfalls für die Bewegung der Schwenkmechanik zu nutzen oder zwei getrennte Antriebe für die Lateralmechanik und die Schwenkmechanik vorzusehen. Diese werden dann nach Bedarf separat angesteuert.

Bei allen Varianten ist es möglich, dass ein Teil der Bewegungen von einem Energiespeicher, z. B. einer Feder, vorgenommen wird oder diese unterstützend wirkt.

Das Lateralgetriebe und / oder das Schwenkgetriebe umfassen z.B. wenigstens einen Antrieb, z.B. in Form eines Motors und / oder eines Energiespeichers zur Bewegung der jeweiligen Mechanik, d.h. der Lateralmechanik und / oder der Schwenkmechanik. Energiespeicher im Sinne der Erfindung kann z.B. auch eine potentielle Energie oder eine dynamische Energie eines Elements, z.B. der Armauflage, sein. Es können z.B. nur ein Motor oder z.B. jeweils ein Motor als Antrieb für das Lateralgetriebe und das Schwenkgetriebe vorhanden sein. Z.B. wird die Mechanik von einem Elektromotor bewegt. Der Elektromotor kann z.B. ein rotierendes Teil, wie z.B. eine Spindelmutter oder eine Spindel oder ein Zahnradgetriebe antreiben. Alternativ oder zusätzlich kann die Mechanik auch mittels eines Energiespeichers, z.B. mittels einer Feder angetrieben werden.

Die Relativbewegung eines ersten Lenkers des Viergelenks relativ zu einem zweiten Lenker des Viergelenks oder einem zu dem zweiten Lenker in definierter Position stehenden Teil wird gemäß einer besonderen Ausführung dazu verwendet, die Schwenkbewegung der Armauflage anzutreiben. Z.B. wird die Relativbewegung der Lenker dazu verwendet, eine an dem ersten Lenker des Viergelenks gelagerte erste Verzahnung relativ zu einer zweiten Verzahnung zu bewegen, die an einem zweiten Lenker des Viergelenks fest oder bewegbar gelagert ist. Z.B. ist die erste Verzahnung von einem ersten Zahnrad und die zweite Verzahnung von einem zweiten Zahnrad gebildet, welches schwenkbar an dem zweiten Lenker des Viergelenks gelagert ist. Z.B. ist das zweite Zahnrad mit der Armauflage verbunden.

Wenigstens einer der Antriebe von Lateralgetriebe und Schwenkgetriebe umfasst z.B. eine Spindel, die mit einer Spindelmutter in Eingriff steht, wobei die Spindel oder die Spindelmutter antreibbar ist. Auf diese Weise kann z.B. die Lateralmechanik, insbesondere das Viergelenk, zwischen den beiden Endpositionen verstellt werden.

Wenigstens einer der Antriebe von Lateralgetriebe und Schwenkgetriebe umfasst z.B. wenigstens zwei miteinander in Eingriff stehende Zahnräder. Z.B. ist ein Zahnrad der Armauflage zugeordnet und das andere Zahnrad dem Lateralgetriebe oder dem Fahrzeug, insbesondere dem Fahrzeugsitz, zugeordnet. Z.B. weist das Schwenkgetriebe ein Zahnradpaar auf.

An wenigstens einem Schwenkgelenk ist z.B. einer der Lenker des Koppelgetriebes unmittelbar angetrieben. Alternativ oder zusätzlich ist die Schwenkachse unmittelbar angetrieben.

Wenigstens einer der Antriebe von Lateralgetriebe und Schwenkgetriebe ist z.B. mittels wenigstens einer Kupplungsvorrichtung im Weitesten Sinne lösbar mit der jeweiligen Mechanik, d.h. der Lateralmechanik oder der Schwenkmechanik, kuppelbar. Unter Kupplungsvorrichtung sind im Sinne der Erfindung z.B. sowohl trennbare Kupplungselemente, als auch eine Steuerstruktur mit zwei Elementen zu verstehen, wobei ein Element das andere erst nach einem gewissen Bereich des Freilaufs mitnimmt. Mit anderen Worten die mechanische Übertragung der Steuerstruktur von einem ersten Element auf ein zweites Element erfolgt erst nach einem bestimmten Bewegungsbereich des ersten Elements. Unter dem Wort kuppelbar soll im Sinne der Erfindung sowohl einkuppelbar, als auch auskuppelbar verstanden werden. D.h. der Antrieb kann von der jeweiligen Mechanik derart getrennt werden, dass der Antrieb sich unabhängig davon bewegen kann.

Mit diesen Merkmalen ist es möglich, dass unter Umgehung der Antriebsvorrichtung die Armauflage teilweise oder vollständig manuell zwischen der ersten Position und der dritten Position und / oder zwischen der primären und der tertiären Position bewegt wird. Mit diesen Merkmalen ist es möglich einen Antrieb für das Lateralgetriebe und für das Schwenkgetriebe zu verwenden, wobei der Antrieb nicht in allen Bereichen zu einer Bewegung der Schwenkmechanik und / oder der Lateralmechanik führt. Z.B. können auf diese Weise das Lateralgetriebe sowie das Schwenkgetriebe zugleich angetrieben werden, wobei das nicht in allen Bereichen der Bewegung zu einer Schwenkbewegung der Armauflage führen muss.

Beispielsweise wird zur Bewegung der Armauflage aus der Stauposition in die Gebrauchsposition der Antrieb aktiviert, wobei das Lateralgetriebe und das Schwenkgetriebe bewegt werden. Dennoch wird dabei z.B. zunächst lediglich die Lateralmechanik bewegt. Die Bewegung der Schwenkmechanik setzt z.B. aufgrund von zusammenwirkenden Kupplungsstrukturen des Schwenkgetriebes erst ein, wenn die Armauflage lateral soweit von der Rückenlehne beabstandet ist, dass sich die Rückenlehne nicht mehr in der Schwenkbahn der Armauflage befindet.

Beispielsweise wird die Armauflage manuell im ausgekuppelten Zustand des Schwenkgetriebes aus einer etwa horizontalen tertiären Position um ca. 45 Grad nach oben geschwenkt. Die Bewegung in die etwa vertikale primäre Position wird dann z.B. nach dem Einkuppeln des Schwenkgetriebes von selbigem übernommen. Auf diese Weise kann z.B. in einem ergonomisch tolerablen Bereich die Bewegung manuell vorgenommen werden, was z.B. schneller möglich ist. In einem verbleibenden Bewegungsbereich der Armauflage, der manuell nur schwierig durchzuführen bzw. zu unterstützen ist, erfolgt die Bewegung dann mittels des Antriebs.

Gemäß einer Ausführungsform weist die Armlehne eine Verriegelungsvorrichtung auf, mit welcher die Lateralmechanik und/oder die Schwenkmechanik in wenigstens einer Position verriegelbar ist. Beispielsweise ist die Lateralmechanik und / oder die Schwenkmechanik in wenigstens einer Endstellung verriegelbar. Mit anderen Worten ist die Lateralmechanik z.B. in der ersten Position und der dritten Position verriegelbar. Die Schwenkmechanik ist z.B. in der primären Position und der tertiären Position verriegelbar.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

Es zeigen:
Fig. 1 eine perspektivische Ansicht eines Fahrzeugsitzes mit der erfindungsgemäßen Armlehne als Teil des Sitzes, wobei sich die Armauflage in einer Nichtgebrauchsposition befindet,
Fig. 2 eine Seitenansicht des Fahrzeugsitzes gemäß Fig. 1,
Fig. 3 eine Ansicht gemäß Ansichtspfeil G1 in Fig. 2,
Fig. 4a eine Ansicht gemäß Ansichtspfeil F1 in Fig. 3, wobei der Übersichtlichkeit halber die Armlehne ohne die übrigen Bestandteile des Fahrzeugsitzes dargestellt ist,
Fig. 4b eine perspektivische Ansicht der Armauflage gemäß Fig. 4a
Fig. 5 eine Ansicht gemäß Ansichtspfeil E1 in Fig. 4a,
Fig. 6 eine Schnittansicht gemäß Schnittlinie A1 - A1 in Fig. 4a
Fig. 7 eine Schnittansicht gemäß Schnittlinie B1 - B1 in Fig. 4a,
Fig. 8 eine Schnittansicht gemäß Schnittlinie C1 - C1 in Fig. 4a,
Fig. 9a eine Schnittansicht gemäß Schnittlinie D1-D1 in Fig. 5,
Fig. 9b eine vergrößerte Ansicht gemäß Ausschnitt H1 in Fig. 9a,
Fig. 10 eine perspektivische Ansicht des Fahrzeugsitzes gemäß Fig. 1, wobei sich die Armauflage in einer zweiten Position der Lateralmechanik zwischen der proximalen und der distalen Position befindet,
Fig. 11 eine Seitenansicht des Fahrzeugsitzes gemäß Fig. 10,
Fig. 12 eine Draufsicht gemäß Ansichtspfeil G2 in Fig. 11
Fig. 13a die Armlehne gemäß Ansichtspfeil F2 in Fig. 12, wobei der Fahrzeugsitz der Übersichtlichkeit halber nicht dargestellt ist,
Fig. 13b eine perspektivische Ansicht der Armlehne gemäß Fig. 13a,
Fig. 14 eine Ansicht gemäß Ansichtspfeil E2 in Fig. 13a,
Fig. 15 eine Schnittansicht gemäß Schnittlinie A2-A2 in Fig. 13a
Fig. 16 eine Schnittansicht gemäß Schnittlinie B2-B2 in Fig. 13a,
Fig. 17 eine Schnittansicht gemäß Schnittlinie C2 - C2 in Fig. 13a,
Fig. 18a eine Schnittansicht gemäß Schnittlinie D2 - D2 in Fig. 14,
Fig. 18b eine vergrößerte Ansicht gemäß Ausschnitt H2 in Fig. 18a,
Fig. 19 eine Seitenansicht des Fahrzeugsitzes gemäß Fig. 11, wobei sich die Armauflage in der dritten Position der Lateralmechanik und in einer sekundären Position der Schwenkmechanik befindet, die zwischen der primären Position und der tertiären Position angeordnet ist,
Fig. 20 eine Draufsicht gemäß Ansichtspfeil G3 in Fig. 19
Fig. 21a eine Ansicht gemäß Ansichtspfeil F3 Fig. 20, wobei die Armlehne ohne die übrigen Bestandteile des Fahrzeugsitzes dargestellt ist,
Fig. 21b eine perspektivische Ansicht der Armlehne gemäß Fig. 21a,
Fig. 22 eine Ansicht gemäß Ansichtspfeil E3 in Fig. 21,
Fig. 23 eine Schnittansicht gemäß Schnittlinie A3 - A3 in Fig. 21a
Fig. 24 eine Schnittansicht gemäß Schnittlinie B3 - B3in Fig. 21a,
Fig. 25 eine Schnittansicht gemäß Schnittlinie C3 - C3 in Fig. 21a,
Fig. 26a eine Schnittansicht gemäß Schnittlinie D3 - D3 in Fig. 22,
Fig. 26b ein Ausschnitt gemäß Ausschnittlinie H3 in Fig. 26a,
Fig. 27 eine perspektivische Darstellung des Fahrzeugsitzes, wobei sich die Armauflage in einer Gebrauchsposition befindet,
Fig. 28 eine Seitenansicht des Fahrzeugsitzes, wobei sich die Armauflage in der distalen Position der Lateralmechanik und in der zweiten Position der Schwenkmechanik befindet,
Fig. 29 eine Draufsicht gemäß Ansichtspfeil G4 in Fig. 28,
Fig. 30a eine Seitenansicht der Armlehne gemäß Ansichtspfeil F4 in Fig. 29, wobei der Fahrzeugsitz der Übersichtlichkeit halber nicht dargestellt ist,
Fig. 30b eine perspektivische Ansicht der Armauflage gemäß Fig. 30a,
Fig. 31 eine Ansicht gemäß Ansichtspfeil E4 in Fig. 30a,
Fig. 32 eine Schnittansicht gemäß Schnittlinie A4 - A4 in Fig. 30a
Fig. 33 eine Schnittansicht gemäß Schnittlinie B4 - B4 in Fig. 30a,
Fig. 34 eine Schnittansicht gemäß Schnittlinie C4 - C4 in Fig. 30a,
Fig. 35 eine Schnittansicht gemäß Schnittlinie D4 - D4 in Fig. 31,
Fig. 36 eine vergrößerte Ansicht gemäß Ausschnittlinie H4 in Fig. 35.

Ein Fahrzeugsitz insgesamt ist in den Fig. mit dem Bezugszeichen 10 bezeichnet.

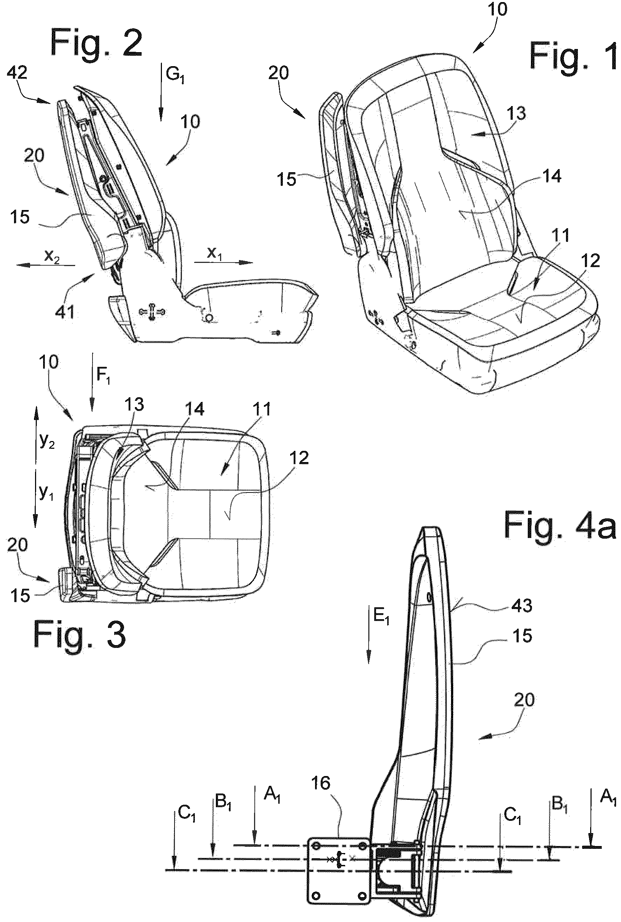

Der Fahrzeugsitz 10 umfasst gemäß Fig. 1 einen Sitzbereich 11 mit einer Sitzfläche 12 sowie eine Rückenlehne 13 mit einer Anlagefläche 14. Die Anlagefläche 14 weist in Richtung x1, parallel zu einer Sagittalebene eines Sitzinsassen. Die Richtung x2 ist der Richtung x1 entgegen gerichtet.

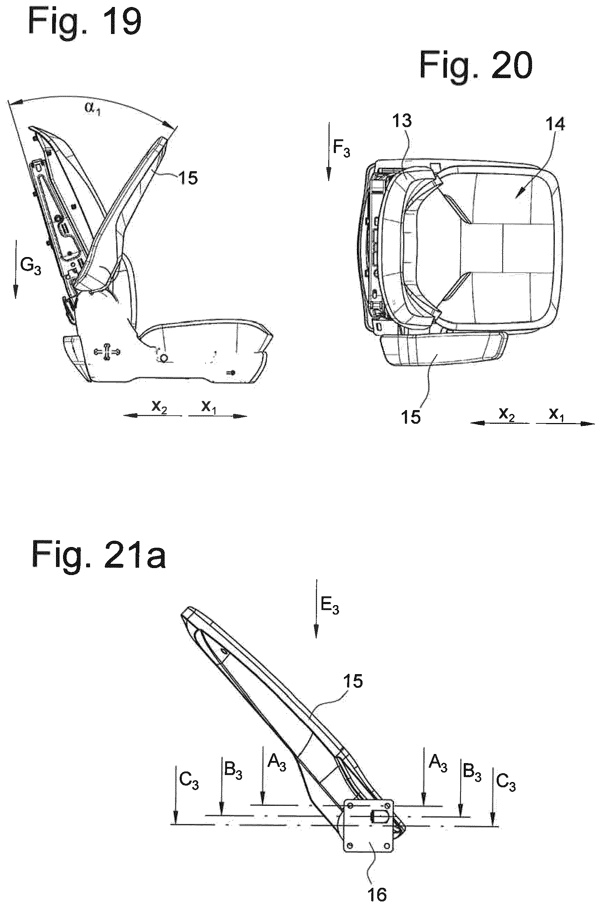

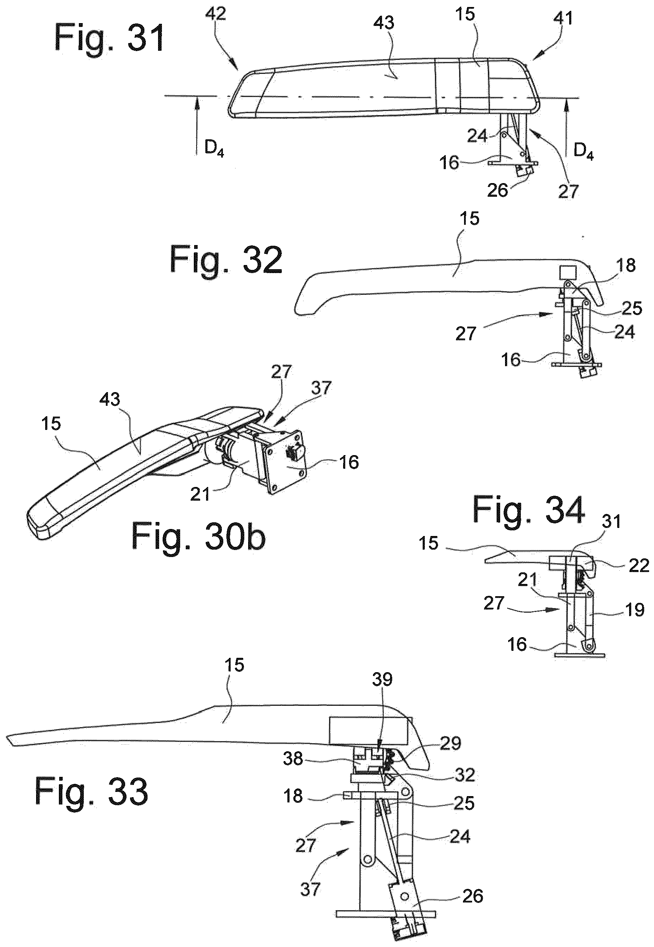

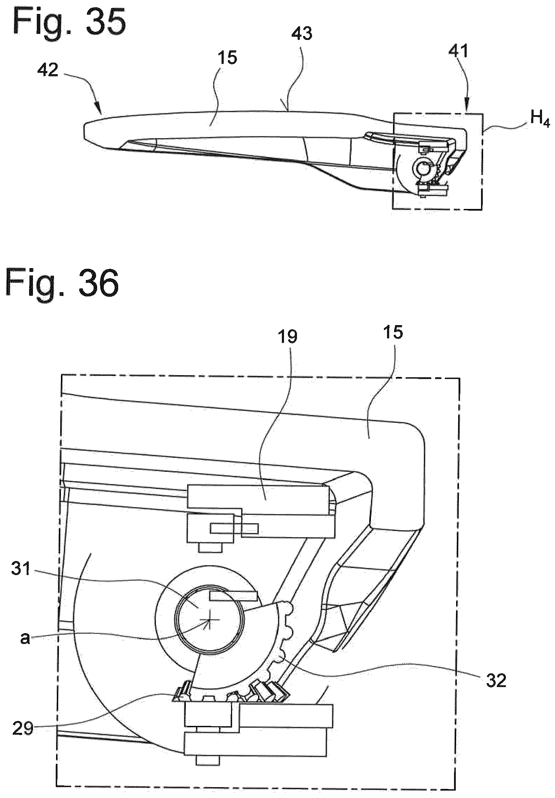

Der Fahrzeugsitz 10 weist eine Armlehne 20 auf, die entsprechend den Merkmalen der Erfindung ausgebildet ist. Die Armlehne 20 umfasst eine Armauflage 15, welche einen befestigungsnahen Endbereich 41 und einen freien Endbereich 42 sowie eine Armauflagefläche 43 umfasst. Mit einer Lateralmechanik 27 ist die Armauflage 15 in die Richtungen y1 und y2 zwischen einer in den Fig. 1 bis 4 dargestellten proximalen ersten Position sowie einer in den Fig. 19 bis 36 dargestellten distalen dritten Position bewegbar.

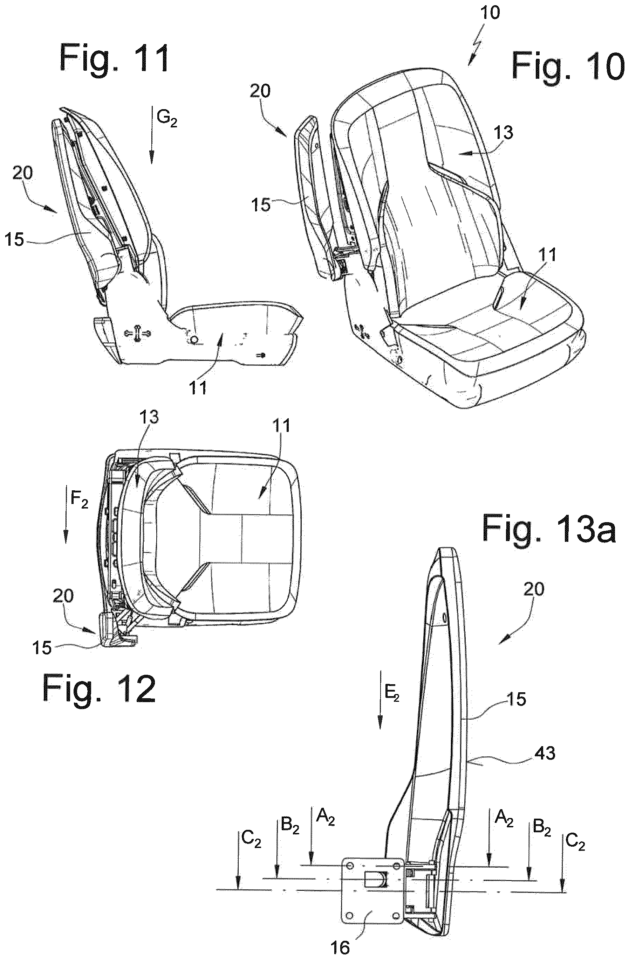

Die Lateralbewegung der Armauflage 15 erfolgt über eine in den Fig. 11 bis 18b dargestellte zweite Position, in welcher sich die Lateralmechanik 27 in einer Zwischenposition zwischen der ersten Position und der zweiten Position befindet. In der ersten Position ist die Armauflage 15 bezüglich der Richtungen y1 und y2 relativ zu der Rückenlehne 13 proximal, d.h. nahe an der Rückenlehne 13, angeordnet und in der dritten Position ist die Armauflage 15 relativ zu der Rückenlehne 13 distal, d.h. in Richtung y2 von der Rückenlehne 13 entfernt, angeordnet.

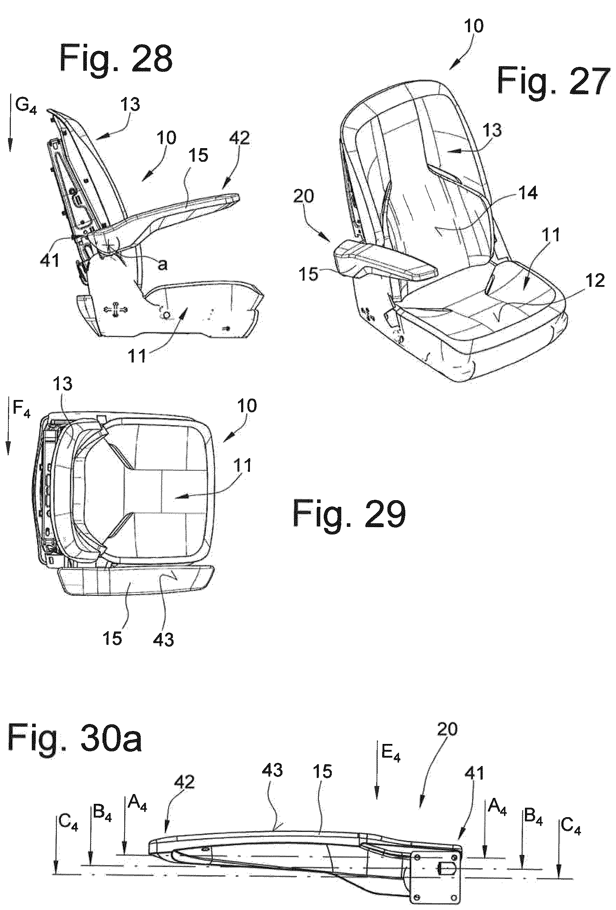

Die Armauflage 15 ist z.B. mit einer Schwenkmechanik 28 in die Drehrichtungen u1 und u2 zwischen einer primären Position (siehe Fig. 1 bis 18b), und einer tertiären Position um eine Schwenkachse a schwenkbar, die in den Fig. 27 bis 36 gezeigt ist. Eine Zwischenposition zwischen der primären Position und der tertiären Position ist als sekundäre Position bezeichnet und in den Fig. 19 bis 26b dargestellt.

Die Armauflage 15 kann in umgekehrte Richtung u2 zwischen der tertiären und der primären Position der Schwenkmechanik 28 nach oben geschwenkt und aus der dritten Position in die erste Position der Lateralmechanik 27 bewegt werden.

In den Fig. 1 und 3 ist erkennbar, dass sich die Armauflage 15 in der ersten Position teilweise in x-Richtung hinter einer Insassen-Anlagefläche der Rückenlehne 13 befindet, so dass ein Schwenken der Armauflage 15 in Richtung u1 gemäß Fig. 2 nicht möglich wäre, weil sich die Rückenlehne 13 in der Bewegungsbahn der Armauflage 15 befände. In dieser Position ragt die Armauflage 15 z. B. seitlich, d.h. bezüglich der Richtung y2, nicht oder lediglich geringfügig über die sich in Richtung y1 und y2 erstreckenden Dimensionen des Sitzbereichs 11 sowie der Rückenlehne 13 hinaus.

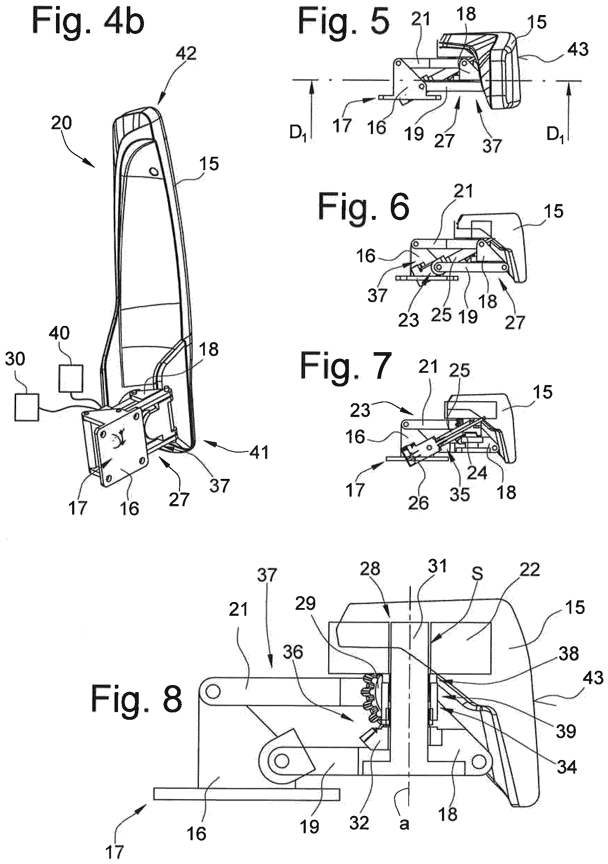

In Fig. 4a und 4b ist die Armlehne 20 ohne die übrigen Bestandteile des Fahrzeugsitzes separat dargestellt. Für die Lateralbewegung in die Richtungen y1 und y2 zwischen der ersten Position und der dritten Position der Armauflage 15 ist, wie oben beschrieben, die Lateralmechanik 27 vorgesehen, die nachfolgend näher erläutert wird. Ein erstes Teil 16 weist Befestigungsmittel 17 in Form eines Flansches auf (siehe die 5 bis 9a), mit welchem es fest an der Struktur der Rückenlehne 13 befestigt ist. Ein zweites Teil 18 ist mit der Armauflage 15 verbunden.

Das erste Teil 16 und das zweite Teil 18 sind untereinander mit einer Gelenkverbindung 37 verbunden. Z.B. ist die Gelenkverbindung 37 als Koppelgetriebe, insbesondere, wie im vorliegenden Ausführungsbeispiel, als Viergelenk ausgebildet. Die Bewegung des zweiten Teils erfolgt z.B. einer horizontalen x-y-Ebene ohne wesentlichen vertikalen z-Anteil der Bewegung.

Die Gelenkverbindung 37 umfasst bei diesem Ausführungsbeispiel einen Lenker 19 sowie einen Lenker 21. Jeder der Lenker 19 und 21 bildet ein Schwenkgelenk mit dem ersten Teil 16 sowie mit dem zweiten Teil 18. Das erste Teil 16, das zweite Teil 18 sowie die Lenker 19 und 21 bilden ein Viergelenk 23. Die Armauflage 15 ist daher mittels des Viergelenks 23 auf einer Koppelkurve zwischen der ersten Position und der dritten Position bewegbar. Die erste Position und die dritte Position der lateralen Bewegungsmechanik 27 sind in Form nicht dargestellter Anschläge festgelegt.

Das zweite Teil 18 ist zudem Träger für einen Teil der Schwenkmechanik 28. Es bildet mit einer Schwenkstruktur 22, mit welcher die Armauflage 15 fest verbunden ist, ein Schwenkgelenk S. Mit dem Schwenkgelenk S ist die Armauflage 15 um die Schwenkachse a, die von der fest mit dem zweiten Teil 18 verbundenen physischen Achse 31 gebildet ist, zwischen der primären Position und der tertiären Position schwenkbar an dem zweiten Teil 18 gehalten. Die primäre Position und die tertiäre Position der Schwenkmechanik 28 sind mit nicht dargestellten Anschlägen definiert.

Grundsätzlich könnte die Armauflage 15 manuell in definierte Positionen bewegt und dort verriegelt werden. D. h., Lateralbewegung sowie die Schwenkbewegung wären manuell durchführbar.

Alternativ wäre es ebenfalls möglich, dass alle vorgenannten Bewegungen der Armauflage 15, d.h. die Bewegung zwischen der ersten und der dritten Position der Lateralmechanik 27 sowie die Bewegung zwischen der primären Position und der tertiären Position der Schwenkmechanik 28 vollständig von wenigstens einem Antrieb angetrieben erfolgten.

Gemäß einer weiteren Alternative wäre es möglich, dass die Lateralbewegung und/oder die Schwenkbewegung in wenigstens einem Teilbereich der Bewegung angetrieben erfolgt.

Im vorliegenden Ausführungsbeispiel verläuft die Bewegung der Armauflage 15 teilautomatisch. Die Bewegung zwischen der ersten Position und der dritten Position wird bezüglich beider Bewegungsrichtungen vollständig angetrieben. Dafür weist die Armlehne 10 eine Antriebsvorrichtung mit einem Motor sowie einem Lateralgetriebe 35 auf.

Die Bewegung zwischen der primären Position und einer sekundären Position (siehe Fig. 19) erfolgt etwa über einen Winkel von etwa 45° relativ zu der primären Position motorisch angetrieben. Dafür weist die Armlehne 10 ein Schwenkgetriebe 36 auf. Die Bewegung zwischen der sekundären und der tertiären Position erfolgt automatisch und wird von der potentiellen Energie der Armauflage 15 angetrieben.

Im vorliegenden Ausführungsbeispiel werden die Lateralmechanik sowie die Schwenkmechanik von nur einem Antrieb 26, z.B. einem Elektromotor angetrieben. Alternativ wäre es ebenfalls möglich, dass die Lateralmechanik von einem ersten Antrieb angetrieben wird und die Schwenkmechanik von einem zweiten Antrieb angetrieben wird.

Das Lateralgetriebe 35 umfasst im vorliegenden Ausführungsbeispiel eine Spindel 24, die mit einer Spindelmutter 25 in Eingriff steht (siehe z.B. Fig. 7) und schwenkbar mit dem ersten Teil verbunden ist. Die Spindelmutter 25 ist fest mit einem der Lenker 19 oder 21, hier mit dem Lenker 21, verbunden. Die Spindel 24 ist mittels eines Motors 26 um ihre Längsmittelachse b drehbar. Auf diese Weise kann mittels des Lateralgetriebes 35, im vorliegenden Fall der Spindel 24 und der Spindelmutter 25, die Armauflage 15 zwischen der ersten und der dritten Position der Lateralmechanik 27 verstellt werden. Bereits in der zweiten Position (siehe Fig. 10), in welcher die Lenker 19 und 21 bzgl. der ersten Position etwa um 45° geschwenkt werden, ist die Armauflage soweit in Richtung y1 bewegt, dass sich die Rückenlehne 13 nicht in der Schwenkbahn zwischen der primären Position und der tertiären Position der Armauflage 15 befindet.

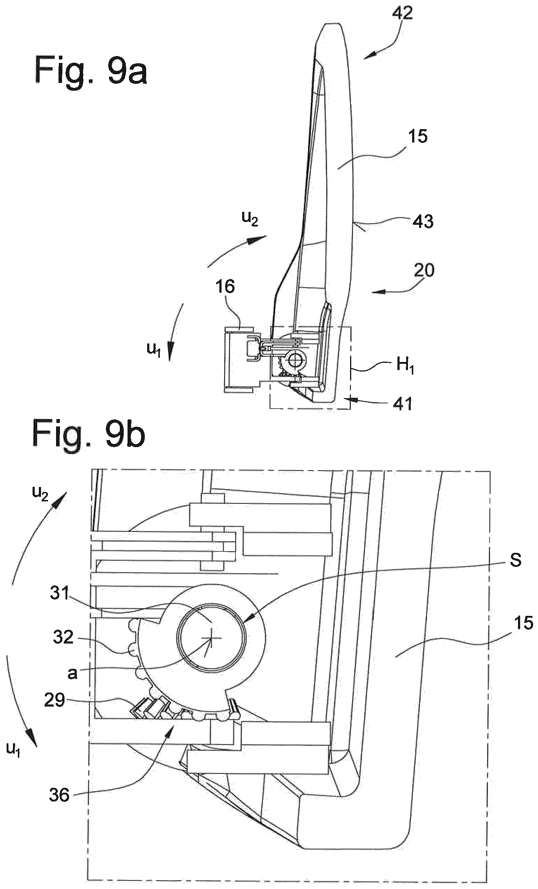

Das Schwenkgetriebe 36 für die Bewegung zwischen der primären und der sekundären Position umfasst im vorliegenden Ausführungsbeispiel eine erste Verzahnung 29, hier in Form eines ersten Zahnrades (siehe Fig. 9a und 9b), welches auf dem Lenker 21 angeordnet und unbewegbar fest mit dem Lenker 21 verbunden ist sowie eine zweite Verzahnung 32, hier in Form eines mit der Armauflage 15 drehverbundenen und relativ zu der Achse 31 in die Richtungen u1 und u2 drehbaren zweiten Zahnrades. Die Achse 31 ist fest an dem zweiten Teil 18 gehalten. Die erste Verzahnung 29 sowie die zweite Verzahnung 32 sind im vorliegenden Fall lediglich von Viertelkreisverzahnungen gebildet. Sie könnten alternativ aber auch anders ausgebildet sein, z.B. als Vollkreisverzahnungen. Das Schwenkgetriebe 36 und das Lateralgetriebe 35 bewegen sich gleichzeitig.

Im vorliegenden Ausführungsbeispiel wird das Schwenkgetriebe 36 von der Relativbewegung des Koppelgetriebes angetrieben, also von der Relativbewegung eines Teils der Lateralmechanik 27 relativ zu dem zweiten Zahnrad 32.

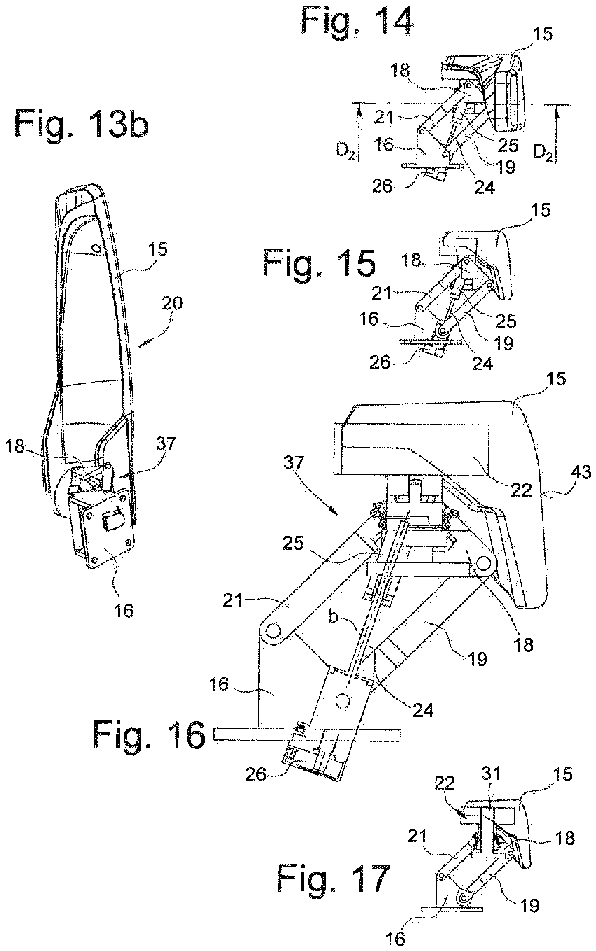

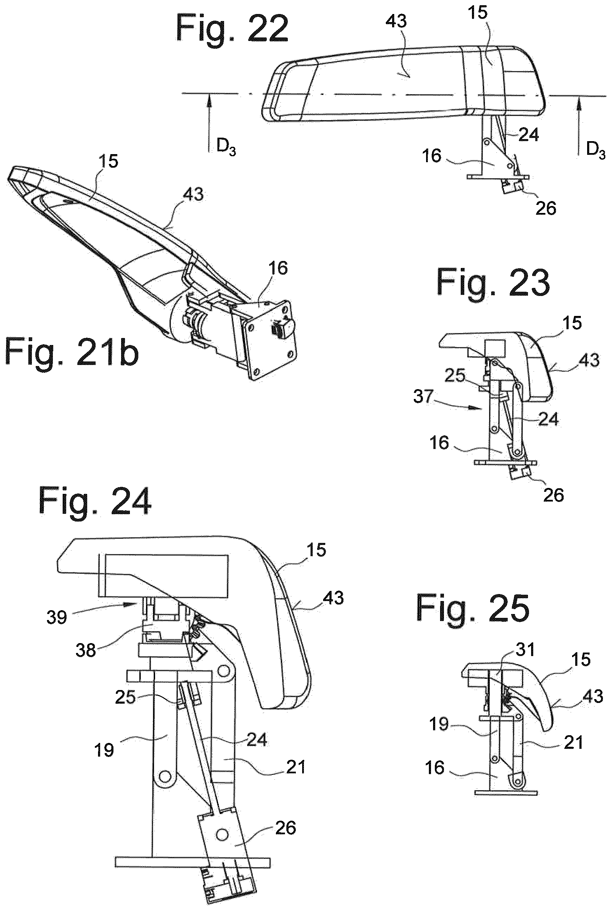

Die Armlehne 10 weist eine Kupplungsvorrichtung 34 auf, die z.B. in den Fig. 16 und 24 dargestellt ist. Mittels der Kupplungsvorrichtung 34 kann die Armauflage 15 von der Antriebsmechanik entkoppelt werden, so dass sie manuell bewegbar ist. Die Kupplungsvorrichtung 34 umfasst im vorliegenden Ausführungsbeispiel eine mit der Armauflage 15 verbundene erste Kupplungsstruktur 38 sowie eine fest mit dem zweiten Zahnrad verbundene zweite Kupplungsstruktur 39. Die erste Kupplungsstruktur 38 kann in Abhängigkeit von der relativen Drehposition zu der zweiten Kupplungsstruktur 39 lösbar in Eingriff mit der zweiten Kupplungsstruktur 39 bewegt werden.

Die Kupplungsstrukturen 38 und 39 bilden Steuerstrukturen, d. h. die Kupplung umfasst einen Freilaufbereich, in welchem die Kupplungsstrukturen 38 und 39 nicht in Eingriff sind sowie einen Eingriffsbereich, in welchem sich die Kupplungsstrukturen 38 und 39 in Eingriff befinden. Mit anderen Worten, in bestimmten Relativpositionen der ersten Verzahnung zu der zweiten Verzahnung 32 bewegen sich die Kupplungsstrukturen 38 und 39 in Eingriff. Eine Übertragung der Bewegung der zweiten Verzahnung findet statt, wenn die Kupplungsstrukturen 38 und 39 in einer Eingriffsposition in Eingriff stehen. In einer Löseposition sind die Kupplungsstrukturen 38 und 39 außer Eingriff und es findet keine Übertragung statt.

Im vorliegenden Ausführungsbeispiel stehen die Kupplungsstrukturen 38 und 39 in Eingriff, wenn sich die Lateralmechanik 27 aus der ersten Position in die zweite Position bewegt hat. Zwischen der ersten Position und der zweiten Position der Lateralmechanik 27 befinden sich die Kupplungsstrukturen 38 und 39 in der Löseposition.

Ferner weist die Armlehne 10 eine Steuervorrichtung 30 auf, die mit einer nicht dargestellten Sensorvorrichtung 40 zusammenwirkt. Diese weist nicht dargestellte Positionssensoren auf. Die Steuervorrichtung 30 steuert den Motor 26. Die Sensoren der Sensorvorrichtung 40 erkennen, ob sich die Lateralmechanik in der ersten oder der dritten Position befindet und ob die Schwenkmechanik 28 in der primären Position oder der tertiären Position steht oder ob sie aus der tertiären Position in die sekundäre Position bewegt wurde und die sekundäre Position erreicht hat.

Nachfolgend wird der gesamte Bewegungsablauf der Armauflage 15 noch einmal vollständig erläutert.

Z.B. nach Betätigung eines nicht dargestellten Schalters von einem Sitzinsassen erhält die Steuervorrichtung 30 das Signal, dass die Armauflage 15 aus der Nichtgebrauchsposition in eine Gebrauchsposition überführt werden soll. Die Armauflage 15 ist gemäß der Fig. 1 bis 9b in der Nichtgebrauchsposition gezeigt. Von der Steuervorrichtung wird dann der Antrieb 26 aktiviert. Dieser bewegt die Spindelmutter 25 des Lateralgetriebes 35, so dass die Lateralmechanik 27 in eine erste Bewegungsrichtung der Koppelkurve bewegt wird. Aufgrund der Bewegung der Lateralmechanik wird auch das Schwenkgetriebe 36 angetrieben, so dass auch die Verzahnungen 38 und 39 aufeinander abwälzen. Die Veränderungen der Relativpositionen des Vielgelenkes relativ zu der zweiten Verzahnung 32 werden als Antrieb genutzt, um die Armauflage 15 zu schwenken.

Zu Beginn der Bewegung befinden sich der Lateralantrieb in der Position gemäß Fig. 7 und der Schwenkantrieb 36 in der Position gemäß Fig. 9b.

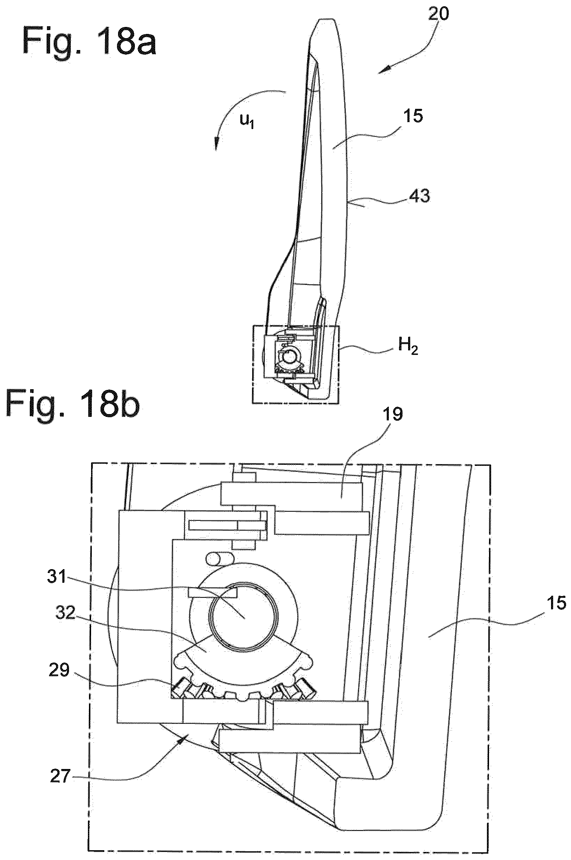

Aufgrund des Freilaufbereiches der Kupplungsvorrichtung 34 wälzt das Schwenkgetriebe 36 über einen bestimmten Bereich aufeinander ab, ohne dass die Armauflage 15 sich aus der primären Position (vgl. die Fig. 1 und 10 - 18b) bewegt. Wenn der Freilaufbereich überwunden ist und sich die Kupplungsstrukturen 38 und 39 in der Eingriffsposition befinden, was in der zweiten Position der Lateralmechanik 27 der Fall ist (siehe die Fig. 10 bis 18b), treibt das Schwenkgetriebe 36 bei der weiteren Bewegung die Armauflage 15 in Richtung u1 an. In der Eingriffsposition weisen die Verzahnungen 38 und 39 die Position gemäß Fig. 18b auf.

Wenn die Armauflage 15 aus der primären Position einen bestimmten Schwenkwinkel in Richtung u1 zurückgelegt hat, belastet die Gewichtskraft die Armauflage 15 in Richtung u1. Die Kupplungsvorrichtung 34 lässt die Bewegung in Richtung u1 zu. Mittels eines Rotationsdämpfers wird verhindert, dass sich die Armauflage 15 unter Belastung durch die Gewichtskraft ungebremst in Richtung u1 in die tertiäre Position gemäß Fig. 27 bis 36 bewegt.

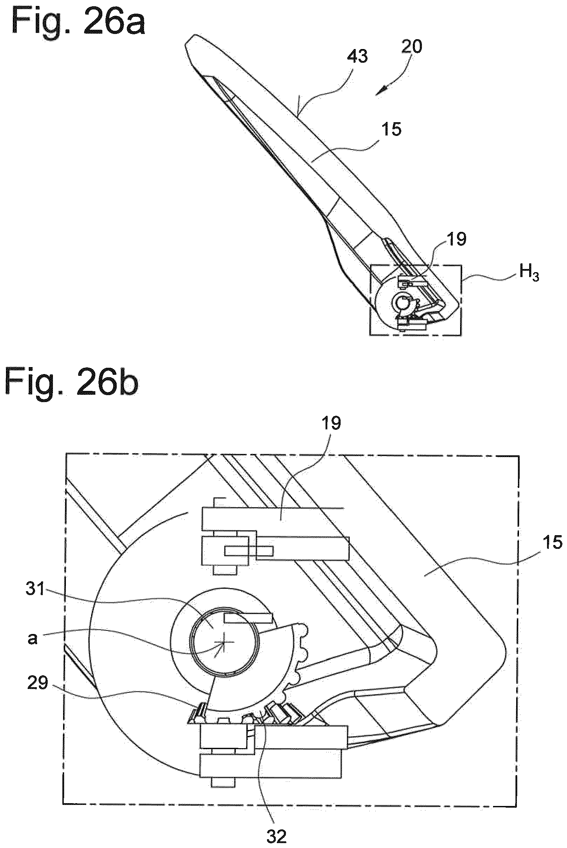

Wenn die Lateralmechanik 27 die dritte Position erreicht hat, befindet sich das Lateralgetriebe 35 in der Position gemäß Fig. 23 und das Schwenkgetriebe 36 in der Position gemäß Fig. 26b, d.h. dass sich die Verzahnungen 29 und 32 an einem zweiten Endbereich befinden. Die Armauflage 15 ist gemäß der Fig. 20 bis 26b in einer 45°-Position gezeigt, obwohl sie sich, wie oben erläutert, aufgrund der Freilaufbereiche der Kupplungsvorrichtung 34 unabhängig von dem Schwenkgetriebe 36 bewegen kann. Sobald über die Positionssensoren der Sensorvorrichtung 40 eine Rückmeldung gegeben wird, dass die dritte Position erreicht ist, gibt die Steuervorrichtung 30 ein Signal an die laterale Antriebsvorrichtung 27, den Antrieb 26 zu stoppen.

Die Aufwärtsbewegung findet in umgekehrte Richtung statt. Die Armauflage 15 wird aus der tertiären Position manuell in die sekundäre Position bewegt, während mittels der Kupplungsvorrichtung 34 die sekundäre Antriebsmechanik 36 weiterhin entkuppelt ist. Erreichen die Kupplungsstrukturen 38 und 39 die Eingriffsposition, wird die Kupplungsstruktur 39 mit der Kupplungsstruktur 38 - z.B. von einem nicht dargestellten Mitnahmestift - verrastet. Das Erreichen der sekundären Position der Armauflage 15 wird von der Sensorvorrichtung 40 an die Steuervorrichtung 30 übermittelt, woraufhin diese den Antrieb 26 zur Bewegung in umgekehrte Richtung veranlasst, derart, dass die Armauflage 15 in Richtung u2 schwenkt.

Nach einem Schwenkradius von etwa 45° hat die Armauflage 15 wieder die primäre Position und die Lateralmechanik 27 hat die zweite Position erreicht. Die Verrastung der Kupplungsstrukturen 38 und 39 wird nun gelöst. Die Kupplungsvorrichtung 34 erlaubt eine zusätzliche Relativbewegung der Kupplungsstrukturen 38 und 39, ohne dass dabei die Armauflage 15 aus der primären Position bewegt wird. Die weitere Bewegung des Antriebs, d. h. des Motors 26, hat also keinen Einfluss auf die Schwenk-Position der Armauflage 15, weil diese sich danach wieder in dem Freilaufbereich befindet.

Die Lateralmechanik 27 kann daher aus der zweiten in die erste Position bewegt werden. Sobald die erste Position erreicht wurde, wird der Antrieb von der Steuervorrichtung 30 angehalten.

## Patentansprüche

1. Armlehne mit einer Armauflage (15) für einen Fahrzeugsitz (10), die mit einer Lateralmechanik (27) relativ zu einer Basis zwischen einer ersten proximalen und einer dritten distalen Position bewegbar ist und mit einer Schwenkmechanik (28) zwischen einer primären Schwenkposition und einer tertiären Schwenkposition schwenkbar ist, wobei die Lateralmechanik (27) ein erstes Teil (16) der Basis und ein der Armauflage (15) zugeordnetes zweites Teil (18) umfasst, wobei das erste Teil (16) mit einer Gelenkverbindung (37) mit dem zweiten Teil (21) verbunden wobei die Armauflage zwischen einer Nichtgebrauchsposition und einer Gebrauchsposition bewegbar ist, und die Armauflage (15) in der ersten Position in einer Aussparung der Rückenlehne (13) aufgenommen ist und / oder bezüglich einer Richtung x parallel zu einer Sagittalebene des Sitzes hinter einer Insassen-Anlagefläche der Rückenlehne(13) des Sitzes angordnet ist, wobei die Gelenkverbindung (37) wenigstens ein Koppelgetriebe umfasst, welches als wenigstens ein Viergelenk ausgebildet ist.

2. Armlehne nach Anspruch 1, **dadurch gekennzeichnet, dass** die Relativbewegung eines der Lenker (21) des Koppelgetriebes relativ zu einem Element des Schwenkgetriebes, insbesondere des Viergelenks, zugleich Antrieb für das Schwenkgetriebe ist.

3. Armlehne nach einem der vorangehenden Ansprüche, **dadurch gekennzeichnet, dass** die Schwenkmechanik (28) ein dem zweiten Teil zugeordnetes erstes Schwenkelement (18) sowie ein armauflagefestes zweites Schwenkelement umfasst, wobei das erste Schwenkelement und das zweite Schwenkelement miteinander ein Schwenkgelenk (S) bilden.

4. Armlehne nach einem der vorangehenden Ansprüche, **dadurch gekennzeichnet, dass** die Lateralmechanik (27) mit einem Lateralgetriebe (35) antreibbar ist, wobei das Lateralgetriebe (35) ein erstes Antriebsteil aufweist, welches dem ersten Teil (16) zugeordnet ist und ein mit dem ersten Antriebsteil in Eingriff stehendes zweites Antriebsteil aufweist, welches dem zweiten Teil (18) zugeordnet ist.

5. Armlehne nach einem der vorangehenden Ansprüche, **dadurch gekennzeichnet, dass** die Schwenkmechanik (28) mit einem Schwenkgetriebe (36) antreibbar ist, wobei das Schwenkgetriebe (35) ein erstes Antriebsteil aufweist, welches dem zweiten Teil (18) zugeordnet ist und ein mit dem ersten Antriebsteil in Eingriff stehendes zweites Antriebsteil aufweist, welches der Armauflage (15) zugeordnet ist.

6. Armlehne nach einem der vorangehenden Ansprüche, **dadurch gekennzeichnet, dass** eine Antriebsvorrichtung vorgesehen ist, welche das Lateralgetriebe (35) und / oder das Schwenkgetriebe (36) sowie wenigstens einen Motor und / oder einen Energiespeicher umfasst.

7. Armlehne nach einem der vorangehenden Ansprüche, **dadurch gekennzeichnet, dass** wenigstens ein Antrieb von Lateralgetriebe (35) und Schwenkgetriebe (36) eine Spindel (24) umfasst, die mit einer Spindelmutter (25) in Eingriff steht, wobei die Spindel (24) oder die Spindelmutter (25) antreibbar ist.

8. Armlehne nach einem der vorangehenden Ansprüche, **dadurch gekennzeichnet, dass** wenigstens ein Antrieb von Lateralgetriebe (35) und Schwenkgetriebe (36) ein erstes Zahnrad (29) sowie ein zweites Zahnrad (32) aufweist, wobei die Zahnräder (29, 32) in Eingriff stehen.

9. Armlehne nach einem der vorangehenden Ansprüche, **dadurch gekennzeichnet, dass** mittels wenigstens einer Kupplungsvorrichtung (34) mit einer der Basis zugeordneten ersten Kupplungsstruktur (38) und einer der Armauflage (15) zugeordneten zweiten Kupplungsstruktur (39) das Lateralgetriebe (35) und / oder das Schwenkgetriebe (36) mit der Armauflage (15) lösbar kuppelbar ist.

10. Armlehne nach einem der vorangehenden Ansprüche, **dadurch gekennzeichnet, dass** die Kupplungsvorrichtung (34) die erste Kupplungsstruktur (38) mit einem ersten Antriebsteil und die zweite Kupplungsstruktur (39) mit einem zweiten Antriebsteil des Lateralgetriebes und / oder des Schwenkgetriebes verbunden ist.

11. Armlehne nach einem der vorangehenden Ansprüche, **dadurch gekennzeichnet, dass** eine Steuervorrichtung (30) vorgesehen ist, welche das Lateralgetriebe (35) und das Schwenkgetriebe (36) steuert.

12. Armlehne nach Anspruch 11, **dadurch gekennzeichnet, dass** eine Sensorvorrichtung (40) vorgesehen ist, welche Positionssensoren umfasst, mit welchen die Position der Armauflage (15) ermittelbar ist und mit welcher die ermittelten Daten an die Steuervorrichtung (30) übertragbar sind.

14. Armlehne nach Anspruch

15. Armlehne nach einem der vorangehenden Ansprüche, **dadurch gekennzeichnet, dass** eine Arretiervorrichtung vorgesehen ist, mittels welcher die Lateralmechanik (27) und / oder die Schwenkmechanik (28) in wenigstens einer Position verriegelbar ist.

## Claims

1. Armrest having an arm support (15) for a vehicle seat (10), which can be moved between a first proximal and a third distal position relative to a base with a lateral mechanism (27) and can be pivoted between a primary pivot position and a tertiary pivot position with a pivot mechanism (28), wherein the lateral mechanism (27) comprises a first part (16) of the base and a second part (18) assigned to the arm support (15), wherein the first part (16) is connected to the second part (18) by means of a hinge connection (37), wherein
the arm support can be moved between a non-use position and a use position, and the arm support (15) is accommodated in a recess of the backrest (13) in the first position and/or is arranged behind an occupant contact surface of the backrest (13) of the seat, in relation to a direction x parallel to a sagittal plane of the seat, wherein the hinge connection (37) comprises at least one coupling gear, which is designed as at least one four-bar linkage.

2. Armrest according to claim 1, **characterised in that** the relative movement of one of the guide rods (21) of the coupling gear relative to an element of the pivot gear, in particular of the four-bar linkage, is a drive for the pivot gear at the same time.

3. Armrest according to one of the preceding claims, **characterised in that** the pivot mechanism (28) comprises a first pivot element (18) assigned to the second part and a second pivot element fixed to the arm support, wherein the first pivot element and the second pivot element form a pivot joint (S) with each other.

4. Armrest according to one of the preceding claims, **characterised in that** the lateral mechanism (27) can be driven with a lateral gear (35), wherein the lateral gear (35) has a first drive part, which is assigned to the first part (16) and has a second drive part engaged with the first drive part, which is assigned to the second part (18).

5. Armrest according to one of the preceding claims, **characterised in that** the pivot mechanism (28) can be driven with a pivot gear (36), wherein the pivot gear (36) has a first drive part, which is assigned to the second part (18) and has a second drive part engaged with the first drive part, which is assigned to the arm support (15).

6. Armrest according to one of the preceding claims, **characterised in that** a drive device is provided, which comprises the lateral gear (35) and/or the pivot gear (36) and at least one motor and/or energy storage device.

7. Armrest according to one of the preceding claims, **characterised in that** at least one drive of the lateral gear (35) and pivot gear (36) comprises a spindle (24), which engages with a spindle nut (25), wherein the spindle (24) or the spindle nut (25) can be driven.

8. Armrest according to one of the preceding claims, **characterised in that** at least one drive of the lateral gear (35) and pivot gear (36) has a first gear wheel (29) and a second gear wheel (32), wherein the gear wheels (29, 32) are engaged.

9. Armrest according to one of the preceding claims, **characterised in that** the lateral gear (35) and/or the pivot gear (36) can be releasably coupled to the arm support (15) by means of at least one coupling device (34) having a first coupling structure (38) assigned to the base and a second coupling structure (39) assigned to the arm support (15).

10. Armrest according to one of the preceding claims, **characterised in that** from the coupling device (34), the first coupling structure (38) is connected to a first drive part and the second coupling structure (39) is connected to a second drive part of the lateral gear and/or the pivot gear.

11. Armrest according to one of the preceding claims, **characterised in that** a control device (30) is provided, which controls the lateral gear (35) and the pivot gear (36).

12. Armrest according to claim 11, **characterised in that** a sensor device (40) is provided, which comprises position sensors, with which the position of the arm support (15) can be determined and with which the determined data can be transmitted to the control device (30).

14. Armrest according

15. Armrest according to one of the preceding claims, **characterised in that** a locking device is provided, by means of which the lateral mechanism (27) and/or the pivot mechanism (28) can be locked in at least one position.

## Revendications

1. Accoudoir avec un appuie-bras (15) destiné à un siège de véhicule (10), qui peut être déplacé par rapport à un socle avec un mécanisme latéral (27) entre une première position proximale et une troisième position distale et peut pivoter avec un mécanisme de pivotement (28) entre une position de pivotement primaire et une position de pivotement tertiaire, le mécanisme latéral (27) comportant une première partie (16) du socle et une deuxième partie (18) associée à l'appuie-bras (15), la première partie (16) étant reliée à la deuxième partie (18) par une liaison articulée (37), l'appuie-bras pouvant se déplacer entre une position de non-utilisation et une position d'utilisation, et l'appuie-bras (15) étant logé dans la première position dans une cavité du dossier (13) et/ou disposé, par rapport à une direction x parallèle à un plan sagittal du siège, derrière une surface d'appui d'occupant du dossier (13) du siège, la liaison articulée (37) comprenant au moins un engrenage d'accouplement qui est configuré comme au moins un quadrilatère articulé.

2. Accoudoir selon la revendication 1, **caractérisé en ce que** le mouvement relatif d'un des bras (21) de l'engrenage d'accouplement par rapport à un élément de l'engrenage de pivotement, en particulier du quadrilatère articulé, sert en même temps d'entraînement pour l'engrenage de pivotement.

3. Accoudoir selon une des revendications précédentes, **caractérisé en ce que** le mécanisme de pivotement (28) comporte un premier élément de pivotement (18) associé à la deuxième partie ainsi qu'un deuxième élément de pivotement fixé sur l'appuie-bras, le premier élément de pivotement et le deuxième élément de pivotement formant ensemble une articulation de pivotement (S).

4. Accoudoir selon une des revendications précédentes, **caractérisé en ce que** le mécanisme latéral (27) peut être entraîné avec un engrenage latéral (35), cet engrenage latéral (35) comportant une première partie d'entraînement qui est associée à la première partie (16) et une deuxième partie d'entraînement en prise avec la première partie d'entraînement qui est associée à la deuxième partie (18).

5. Accoudoir selon une des revendications précédentes, **caractérisé en ce que** le mécanisme de pivotement (28) peut être entraîné avec un engrenage de pivotement (36), cet engrenage de pivotement (36) comportant une première partie d'entraînement qui est associée à la deuxième partie (18) et une deuxième partie d'entraînement en prise avec la première partie d'entraînement qui est associée à l'appuie-bras (15).

6. Accoudoir selon une des revendications précédentes, **caractérisé en ce qu'**il est prévu un dispositif d'entraînement qui comporte l'engrenage latéral (35) et/ou l'engrenage de pivotement (36) ainsi qu'au moins un moteur et/ou un accumulateur d'énergie.

7. Accoudoir selon une des revendications précédentes, **caractérisé en ce qu'**au moins un entraînement de l'engrenage latéral (35) et de l'engrenage de pivotement (36) comporte une broche (24) qui est en prise avec un écrou de broche (25), la broche (24) ou l'écrou de broche (25) pouvant être entraîné.

8. Accoudoir selon une des revendications précédentes, **caractérisé en ce qu'**au moins un entraînement de l'engrenage latéral (35) et de l'engrenage de pivotement (36) comporte une première roue dentée (29) ainsi qu'une deuxième roue dentée (32), ces roues dentées (29, 32) étant en prise.

9. Accoudoir selon une des revendications précédentes, **caractérisé en ce qu'**au moyen d'au moins un dispositif d'accouplement (34) doté d'une première structure d'accouplement (38) associée au socle et d'une deuxième structure d'accouplement (39) associée à l'appuie-bras (15), l'engrenage latéral (35) et/ou l'engrenage de pivotement (36) peuvent être accouplés de manière détachable avec l'appuie-bras (15).

10. Accoudoir selon une des revendications précédentes, **caractérisé en ce que** de la part du dispositif d'accouplement (34) la première structure d'accouplement (38) est reliée avec une première partie d'entraînement et la deuxième structure d'accouplement (39) avec une deuxième partie d'entraînement de l'engrenage latéral et/ou de l'engrenage de pivotement.

11. Accoudoir selon une des revendications précédentes, **caractérisé en ce qu'**il est prévu un dispositif de commande (30) qui commande l'engrenage latéral (35) et l'engrenage de pivotement (36).

12. Accoudoir selon la revendication 11, **caractérisé en ce qu'**il est prévu un dispositif de détection (40) qui comporte des détecteurs de position avec lesquels la position de l'appuie-bras (15) peut être établie et avec lesquels les données établies peuvent être transmises au dispositif de commande (30).

14. Accoudoir selon la

15. Accoudoir selon une des revendications précédentes, **caractérisé en ce qu'**il est prévu un dispositif de verrouillage au moyen duquel le mécanisme latéral (27) et/ou le mécanisme de pivotement (28) peuvent être verrouillés dans au moins une position.
